# EUROPEAN PATENT APPLICATION

(11) **EP 0 686 472 A2**
(43) Date of publication of application: **13.12.1995**
(21) Application number: 95830151.7
(22) Date of filing: 14.04.1995
(51) Int. Cl.: B29C 45/12, B29C 45/32

(54) **Machine for moulding plastic materials with several moulds and a single injection unit**

(30) Priority: 10.06.1994 IT BS940068
(71) Applicant: SUPPLY S.r.l., I-25020 Capriano del Colle (Brescia) (IT)
(72) Inventor: Archetti, Fabio, I-25049 Iseo (Brescia) (IT)
(74) Representative: Manzoni, Orazio

(57) **Abstract**

A machine for injection moulding of plastic materials, which comprises an injection press (10) and an injection unit (11). The press carried between a fixed mould-holder plate (14) and a mobile mould-holder plate (15) two, three, or more moulds (21,22,23, ...) that lock shut with the closing movement of the mobile mould-holder plate (15) and by means of locking bolts (26), and the injection unit (11) is placed on one side and oriented transversally to the press and can be transferred on guides (31) to be positioned by each one of said moulds and inject the material from one side of every mould.

## Description

The present invention pertains, in general, to the sector of machines for the injection moulding of plastic materials, and more specifically, it concerns horizontal injection presses comprising a base, four horizontal columns placed above the base according to the vertices of a quadrilateral, a stationary mould-holder fixed on the base and resting against stop blocks at one end of the columns; a mobile mould-holder plate guided on the base and along the columns; a reaction plate which can be positioned on the base and resting against reaction blocks at the other end of the columns; and a control mechanism placed between the reaction plate and the mobile plate to close and open the press by means of the movements of the mobile mould-holder plate with respect to the fixed mould-holder plate.

These injection presses are usually provided with only one mould and an injection unit for the plastic material. The mould is placed between the fixed and mobile mould-holder plates and is closed and opened by means of the control mechanism connected to the mobile mould-holder plate; the injection unit is placed in parallel with the axis of the mould. In any case the injection unit is passive throughout all the phases of preparing, closing and opening the mould and taking out the pieces, and this limits the production capacities of the machine to the work of the single mould.

The primary object of the present invention is to provide an injection press bearing at the same time two, three or more moulds and equipped with a single injection unit at the service of all the moulds provided on the machine.

Another object of the invention is to provide an injection press for plastic materials with several aligned moulds, placed between the fixed and mobile mould-holder plates, which can be locked shut with the usual press control mechanism and opened selectively one at a time in the course of and in relation to the moulding cycles.

An additional object of the invention is to provide an injection press with a single injector unit at the service of all the movable moulds adjacent to the press to be able to be positioned by each mould in order to inject the plastic material from one side of each mould selectively.

Thus, the advantages of being able to use and manage several moulds within the framework of the same machine and to use a single injection unit for several moulds are achieved. This results in a cutting down of the machine downtimes, increasing its productivity.

Said objects and advantages are achieved by a press for moulding plastic materials of the above mentioned type and improved according to the characterizing part of claim 1.

Further details of the invention will however become apparent from the continuation of the description made with reference to the attached deawings, in which:

Figure 1 illustrates a press according to the invention viewed from above.

Figure 2 illustrates a side view of the press in Figure 1.

Figure 3 illustrates a view of one end of the press in the direction of the A in Figure 2.

Figure 4 illustrates a detailed view of a block for one mould.

And Figure 5 illustrates a section according to arrow V-V in Figure 4.

The machine according to the invention comprises a press 10 and an injector unit 11 associated with it.

The press 10 has a known design comprising: a base 12; four horizontal columns 13 placed over the base according to the vertices of a quadrilateral; a stationary mould-holder plate 14, fixed onto the base 12 and resting against stop blocks 13' and one end of the columns 13; a mobile mould-holder plate 15 guided on the base and along the columns; a reaction plate 16, which can be positioned on the base and resting against the reaction blocks 13'' at the other end of the columns, and a control mechanism 17, for example of the toggle type, placed between the reaction plane 16 and the mobile mould-holder plate 15 and operated by at least one hydraulic cylinder 18 to shut/open the press through the movements of the mobile mould-holder plate 15 with respect to the fixed mould-holder plate 14.

According to the invention, the press 10 is equipped with one, two, or more additional mould-holder plates 19, 20, ... n, placed between the fixed mould-holder plate 14 and the mobile mould-holder plate 15 and also guided on the horizontal columns 13. The fixed mould-holder plate 14, mobile mould-holder plate 15 and additional mould holder plates 19, 20 ... n carry, in association, two, three, or more moulds 21, 22, 23, ... aligned on the axis of the press. In conformity, a first mould 21 is fitted between the fixed mould-holder plate 14 and a first additional mould-holder plate 19; a second mould 22 is fitted between the first and a second additional mould-holder 19, 20; and a final mould 22 is fitted between the last additional mould-holder plate n and the mobile mould-holder plate 15.

On each one, or on some, of the fixed mould-holder plate 14, mobile mould-holder plate 15 and additional mould-holder plates 19, 20 ... n are applied, adjacent to each column 13, locking devices 24 destined to interact with connecting bars 25 to consecutively connect and selectively disconnect the plates themselves and therefore the moulds.

The connecting bars 25 are placed in parallel to the columns 13 even though staggered from one mould to another.

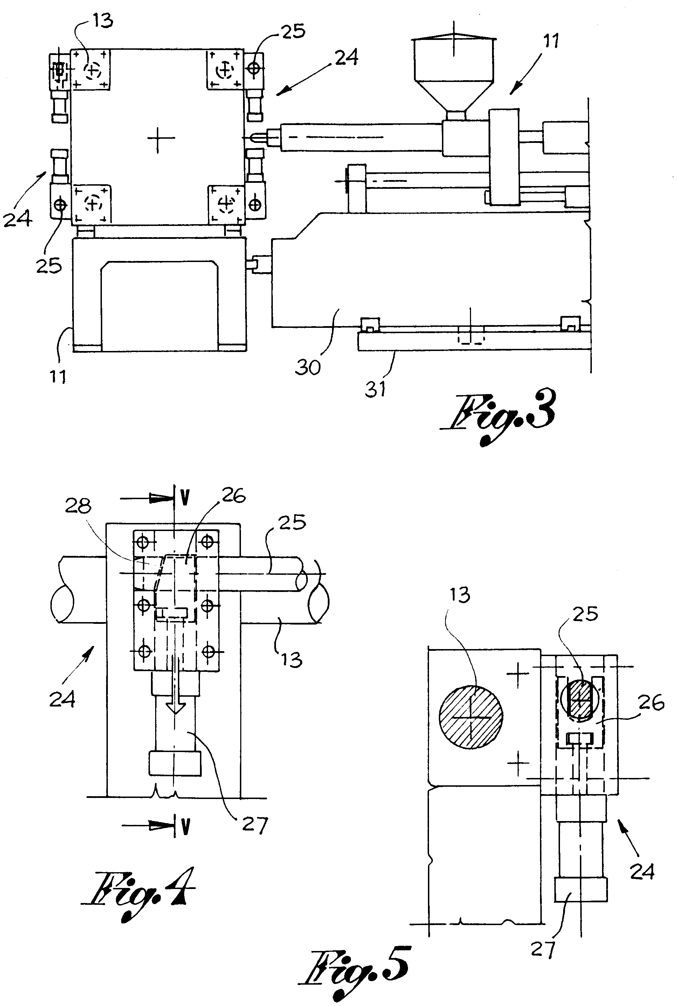

Each locking device 24 is for example in the form of a bolt 26 controlled by a hydraulic cylinder 27 for its movements from an operative to an inoperative position and vice versa. The bolt 26 may be in a fork or in another shape with a wedge-shaped side - see Fig. 4 and 5 - and is anyhow destined, when it is in its operative position, to engage a seat 28 obtained on the part of the connecting rod corresponding to it.

The injection unit 11, whose structure is conventional, is placed on one side of the press 10, oriented crosswise to it. It is carried by a carriage 30 driven on guides 31 in parallel to the longitudinal axis of the press 10 and can be moved on these guides by an appropriate traverse device 32. Thus, the injection unit may be positioned by each mould 21, 22, 23, .... These moulds and the injection unit are required to inject the plastic material into each mould from one side of it, that is in a transverse direction to the longitudinal axis of the press or through channels made in the mould-holders.

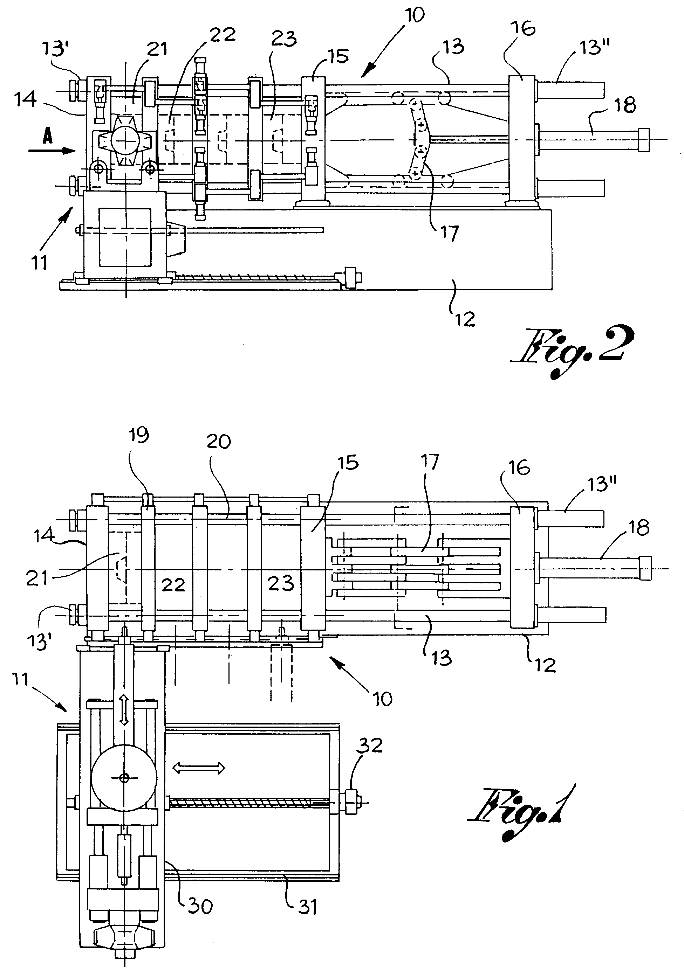

In the above described machine, the mobile mould-holder plate 15, when it is closed by the control mechanism 17, causes all the moulds 21, 22, 23, ... to close between the fixed mould-holder plate 14 and the mobile mould-holder plate 15 - see Fig. 1 and 2. This position is then stabilized at the level of each mould by means of the locking devices 24 whose bolts 26 operated by the respective cylinders 27 engage the corresponding connecting rods 25. A monolithic assembly is thus obtained of aligned moulds and the injection unit 11 can be transferred and then positioned by each mould for injection of the plastic material from one side of each one of them.

The moulds can then be opened to take out the pieces one after another by selectively releasing them by deactivating the locking devices 24 and drawing the mobile mould-holder backwards. Every mould may be opened keeping the others closed thanks to the fact that the location of the locking devices 24 and the connecting rods allow opening one mould keeping the adjacent one locked shut.

## Claims

1. A machine for injection moulding of plastic materials, comprising: an injection press (10) and an injection unit (11) and where the press includes a base (12); four horizontal columns (13) placed above the base according to the vertices of a quadrilateral; a stationary mould-holder plate (14), fixed to the base (12) and resting against stop blocks (13') at one end of the columns (13); a mobile mould-holder plate (15) guided on the base and along the columns; a reaction plate (16), which can be positioned on the base and resting against reaction blocks (13'') at the other end of the columns, and a control mechanism (17), for example, of the toggle type, placed between the reaction plate (16) and the mobile mould-holder plate (15) and operated by at least one hydraulic cylinder (18) to close/open the press by the movements of the mobile mould-holder plate (15) with respect to the fixed mould-holder plate (14), whereby between said fixed mould-holder plate (14) and said mobile mould-holder plate (15) there are two, three, or more moulds (21, 22, 23, ...) that lock shut with the closing movement of the mobile mould-holder plate (14) and wherein said injection unit (11) is placed on one side and oriented transversally to the press and can be transferred on guides to be positioned by each one of said moulds and inject the material from one side of each mould.

2. A machine for injection moulding according to claim 1, wherein the press (10) is equipped with one, two, or more additional mould-holder plates (19, 20, ..., n) placed between the fixed mould-holder plate (14) and the mobile mould-holder plate (15), wherein said fixed mould-holder plates (14), mobile mould-holder plates (15) and additional mould-holder plates (19, 20, ..., n) carry two, three, or more moulds (21, 22, 23, ...) in combination, aligned on the axis of the press and susceptible to closing and opening as a result of movements of the mobile mould-holder plate (15) with respect to the fixed one (14), and wherein each on one or some of said fixed (14), mobile (15) and additional (19, 20, ..., n) mould-holder plates are applied locking devices (24) destined to interact with the connecting bars (25) to connect and disconnect the plates and moulds selectively in order to open said moulds.

3. A machine for injection moulding according to claim 2, wherein said connecting bars (25) are placed in parallel with the horizontal columns (13) of the press, adjacently to them, and wherein every locking device (24) is constrained to the relative fixed, mobile, or additional mould-holder plate and includes a bolt element (26) controlled by a hydraulic cylinder (27) for its movements from an operative position to an inoperative position or vice versa, said bolt (26) engaging a corresponding seat (28) on the connecting rod when it is moved into the operative position.

4. A machine for injection moulding according to claim 3, wherein said bolt (26) is fork- and/or wedge-shaped.

5. A machine for injection moulding according to claim 1, and any one of claims 2-4, wherein said injector unit (11) is fitted on a carriage (30) driven on guides in parallel to the longitudinal axis of the press (10) and is movable on said guides by means of a transferring device (32) for its positioning by and to the side of each mould or of the mould-holders.
